Europäisches Patentamt

(19) European Patent Office

Office européen des brevets

(11) Veröffentlichungsnummer: **0 027 557**
**B1**

# EUROPÄISCHE PATENTSCHRIFT

(45) Veröffentlichungstag der Patentschrift:
13.04.83

(51) Int. Cl.³: **H 04 L 11/00,** H 04 L 25/38

(21) Anmeldenummer: 80105713.4

(22) Anmeldetag: 23.09.80

(54) Schaltungsanordnung zur Übertragung digitaler Signale zwischen mit unterschiedlichen Datenübertragungsprozeduren und mit unterschiedlichen Datenformaten arbeitenden Sende- und Empfangsvorrichtungen.

(30) Priorität: 25.09.79 DE 2938750

(43) Veröffentlichungstag der Anmeldung:
29.04.81 Patentblatt 81/17

(45) Bekanntmachung des Hinweises auf die Patenterteilung:
13.04.83 Patentblatt 83/15

(84) Benannte Vertragsstaaten:
AT BE CH DE FR GB IT LI LU NL SE

(56) Entgegenhaltungen:
EP-A-0 017 035
DE-A-2 134 350
DE-A-2 416 730
DE-B-2 813 961
DE-B-2 853 138

(73) Patentinhaber: SIEMENS AKTIENGESELLSCHAFT,
Berlin und München Wittelsbacherplatz 2,
D-8000 München 2 (DE)

(72) Erfinder: Hagen, Rolf, Dipl.-Ing., Fasanenstrasse 38,
D-8025 Unterhaching (DE)
Erfinder: Bergman, Ola, Solveyien 68, N Oslo 11 (NO)
Erfinder: Harenberg, Jürgen, Ing. Grad.,
Schusterstrasse 15, D-8000 München 71 (DE)
Erfinder: Steiner, Herbert, Gut Schwaigwall 4,
D-8191 Gelting (DE)

Schaltungsanordnung zur Übertragung digitaler Signale zwischen mit unterschiedlichen Datenübertragungsprozeduren und mit unterschiedlichen Datenformaten arbeitenden Sende- und Empfangsvorrichtungen

Im Zusammenhang mit einer Übertragung von digitalen Signalen mit unterschiedlichen Datenübertragungsprozeduren und mit unterschiedlichen Datenformaten zwischen Sende- und Empfangseinrichtungen ist es bereits bekannt (Nachrichtentechnische Zeitschrift, Heft 3, März 1976, Seite 196, Abschnitt 3.2 und Seite 219, Abschnitt 3.), die einzelnen Empfangseinrichtungen für die jeweilige Datenübertragungsprozedur und das jeweilige Datenformat entsprechend einzustellen. Bei diesen Empfangseinrichtungen handelt es sich um Fernschreibmaschinen, die sowohl für die Aufnahme von Fernschreibsignalen (Telex-Betrieb) als auch für die Aufnahme von Bürofernschreiben (Teletex-Betrieb) ausgelegt sein sollen. Die betreffenden Maschinen werden überdies für die Aussendung von Signalen mit den beiden unterschiedlichen Datenübertragungsprozeduren und Datenformaten entsprechend ausgelegt sein. Während beim Telex-Betrieb mit einer Datenübertragungsrate von 50 Bit/sec und mit einer Start-Stop-Steuerung gearbeitet wird, handelt es sich bei dem Teletex-Betrieb um einen synchronen Datenübertragungsbetrieb mit einer Datenübertragungsrate von beispielsweise 2400 Bit/sec. Die somit in den einzelnen Bürofernschreibmaschinen erforderlichen Umschalteinrichtungen machen jedoch einen erheblichen schaltungstechnischen Aufwand erforderlich.

In der Europäischen Anmeldung 0 017 035 (Prioritätstag 30. 3. 1979), die der deutschen Offenlegungsschrift 29 12 649 entspricht, ist ein Weg gezeigt und beansprucht, wie mit demgegenüber geringerem schaltungstechnischen Aufwand ausgekommen werden kann, um digitale Signale mit voneinander verschiedenen Datenübertragungsprozeduren und in voneinander verschiedenen Datenformaten zwischen Sendeeinrichtungen und Empfangseinrichtungen übertragen zu können.

Die erwähnte Europäische Anmeldung bezieht sich dabei auf eine Schaltungsanordnung zur Übertragung von digitalen Signalen zwischen entsprechend einer ersten Datenübertragungsprozedur und mit einem ersten Datenformat arbeitenden Sende- und Empfangseinrichtungen und entsprechend einer von der ersten Datenübertragungsprozedur verschiedenen zweiten Datenübertragungsprozedur sowie mit einem von dem ersten Datenformat verschiedenen zweiten Datenformat arbeitenden Sende- und Empfangseinrichtung über eine Vermittlungsanlage. Unter dem Begriff »Datenübertragungsprozedur« werden sowohl die Datenübertragungsrate als auch die Art der Übertragung von Signalen verstanden.

Als wesentlich wird bei der vorstehend bezeichneten Schaltungsanordnung angesehen, daß die für einen Betrieb mit der ersten Datenübertragungsprozedur und dem ersten Datenformat ausgelegten Sende- und Empfangseinrichtungen und die für einen Betrieb mit der zweiten Datenübertragungsprozedur und dem zweiten Datenformat ausgelegten Sende- und Empfangseinrichtungen an für die jeweilige Datenübertragungsprozedur und das jeweilige Datenformat vorgesehenen gesonderten Anschlußschaltungen einer ersten Gruppe bzw. einer zweiten Gruppe von Anschlußschaltungen der Vermittlungsanlage angeschlossen sind und daß an wenigstens einer Anschlußschaltung jeder Gruppe von Anschlußschaltungen eine Umsetzeinrichtung angeschlossen ist, in die jeweils sämtliche von einer Sendeeinrichtung abgegebene, zu einer Nachricht gehörende Signale entsprechend der ersten Datenübertragungsprozedur und mit dem ersten Datenformat bzw. entsprechend der zweiten Datenübertragungsprozedur und mit dem zweiten Datenformat einschreibbar sind und aus der danach sämtliche zu der jeweiligen Nachricht gehörenden Signale ausspeicherbar und entsprechend der zweiten bzw. mit der ersten Datenübertragungsprozedur und mit dem zweiten bzw. ersten Datenformat an die für eine Signalaufnahme in Frage kommende Empfangseinrichtung abgebbar sind.

Durch diese Maßnahmen ergibt sich jedoch ein relativ hoher Speicheraufwand in der Umsetzeinrichtung.

Der Erfindung liegt nun die Aufgabe zugrunde, einen Weg zu zeigen, wie bei einer Schaltungsanordnung mit den vorstehend aufgezeigten prinzipiellen Merkmalen vorzugehen ist, um mit geringerem Schaltungsaufwand auszukommen als bei der vorstehend betrachteten Schaltungsanordnung, und zwar mit geringem Steuerungsaufwand.

Zur Lösung der vorstehend aufgezeigten Aufgabe geht die vorliegende Erfindung daher aus von einer Schaltungsanordnung zur Übertragung von digitalen Signalen zwischen mit einer ersten Datenübertragungsprozedur und einem ersten Datenformat arbeitenden Sende- und Empfangseinrichtungen und mit einer von der ersten Datenübertragungsprozedur verschiedenen zweiten Datenübertragungsprozedur sowie mit einem von dem ersten Datenformat verschiedenen zweiten Datenformat arbeitenden Sende- und Empfangseinrichtungen über eine Vermittlungsanlage, wobei die Signalübertragung entsprechend der ersten Datenübertragungsprozedur mit einer Datenübertragungsrate erfolgt, die höher ist als die Datenübertragungsrate, mit der eine Signalübertragung entsprechend der zweiten Datenübertragungsprozedur erfolgt, wobei die für einen Betrieb mit der ersten Datenübertragungsprozedur und dem ersten Datenformat ausgelegten Sende- und Empfangseinrichtungen und die für einen Betrieb mit der zweiten Datenübertragungsprozedur und dem zweiten Datenformat ausgelegten Sende- und Empfangseinrichtungen an für die jeweilige Datenübertragungsprozedur und das jeweilige Datenformat vorgesehenen gesonderten Anschlußschaltungen einer ersten Gruppe bzw. einer zweiten Gruppe von Anschlußschaltungen der Vermittlungsanlage angeschlossen sind, wobei an wenigstens einer Anschlußschaltung jeder Gruppe von Anschlußschaltungen eine Umsetzeinrichtung angeschlossen ist, in die lediglich im Zuge einer Signalübertragung von einer mit der ersten Datenübertragungsprozedur und dem ersten Datenformat arbeitenden Sendeeinrichtung zu einer mit der zweiten Datenübertragungsprozedur und dem zweiten Datenformat arbeitenden Empfangseinrichtung die insgesamt abzugebenden Nachrichtensignale in Form von jeweils eine Anzahl von Signalen umfassenden Signalgruppen entsprechend der ersten Datenübertragungsprozedur und mit dem ersten Datenformat einschreibbar sind und aus der danach die zu der jeweiligen Signalgruppe gehörenden Signale ausspeicherbar und entsprechend der zweiten Datenübertragungsprozedur und mit dem zweiten Datenformat an die für eine Signalaufnahme in Frage kommende Empfangseinrichtung abgebbar sind, und wobei im Zuge einer Signalübertragung von einer entsprechend der zweiten Datenübertragungsprozedur und mit dem zweiten Datenformat arbeitenden Sendeeinrichtung zu einer entsprechend der ersten Datenübertragungsprozedur und mit dem ersten Datenformat arbeitenden Empfangseinrichtung die jeweils abzugebenden Nachrichtensignale entsprechend der zweiten Datenübertragungsprozedur und mit dem zweiten Datenformat in die Umsetzeinrichtung einspeicherbar und nach Vorliegen einer ausreichenden Anzahl von Signalen entsprechend der ersten Datenübertragungsprozedur und mit dem ersten Datenformat ausspeicherbar und an die für eine Signalaufnahme in Frage kommende Empfangseinrichtung abgebbar sind.

Als kennzeichnend für die vorstehend bezeichnete Schaltungsanordnung wird erfindungsgemäß angesehen, daß im Anschluß an jede Signalübertragung von der mit dem ersten Datenformat und der ersten Datenübertragungsprozedur arbeitenden Sendeeinrichtung an die Umsetzeinrichtung ein Signalgruppen-Endezeichen abgegeben wird, welches zur Überprüfung der Signalaufnahmefähigkeit in der Umsetzrichtung dient und welches bei Vorliegen einer ausreichenden Signalaufnahmefähigkeit in der Umsetzeinrichtung die Abgabe eines Quittungszeichens an die in Frage kommende Sendeeinrichtung veranlaßt, die erst nach Aufnahme dieses Quittungszeichens eine weitere Signalgruppe bildende Signale abgibt.

Die Erfindung bringt den Vorteil mit sich, daß mit geringerem Steueraufwand bei der Übertragung der Signalgruppen-Endezeichen und Quittungszeichen ausgekommen werden kann als bei der eingangs betrachteten Schaltungsanordnung. Gemäß der vorliegenden Erfindung werden die betreffenden Zeichen nämlich lediglich zwischen mit der ersten Datenübertragungsprozedur und dem ersten Datenformat arbeitenden Sendeeinrichtungen und der Umsetzeinrichtung übertragen, nicht aber noch zwischen der Umsetzeinrichtung und den mit der zweiten Datenübertragungsprozedur und dem zweiten Datenformat arbeitenden Empfangseinrichtungen. Die Verbindungsstrecke zwischen diesen Empfangseinrichtungen und der Umsetzeinrichtung steht also für eine Signalübertragung zur Verfügung.

Zweckmäßige Ausgestaltungen der vorliegenden Erfindung ergeben sich aus den Unteransprüchen.

Anhand einer Zeichnung wird die Erfindung nachstehend an einem Ausführungsbeispiel näher erläutert.

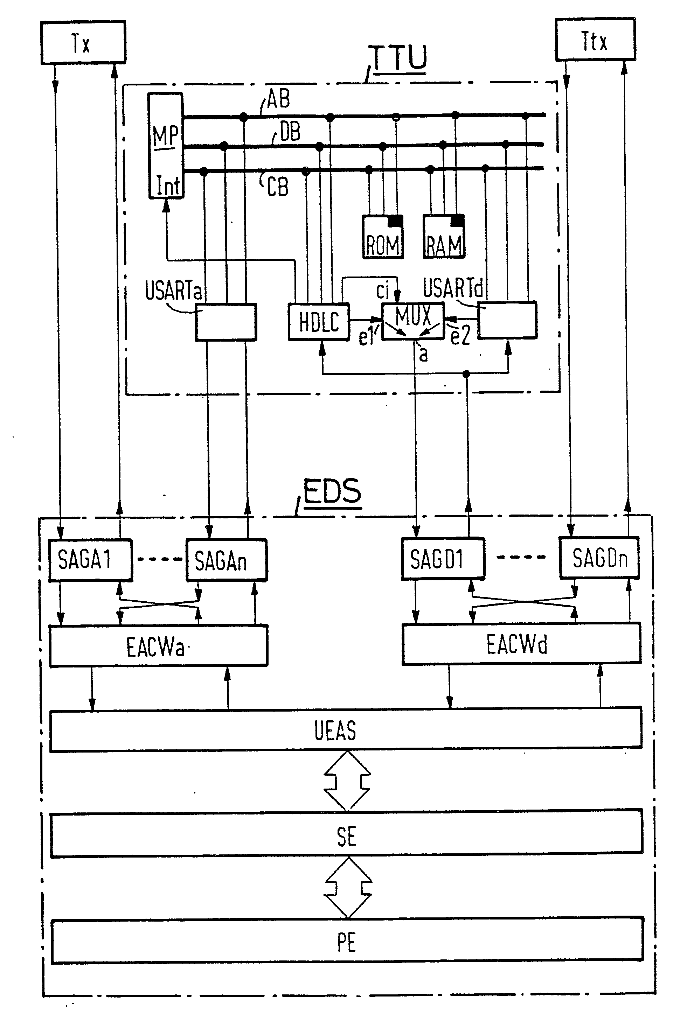

In der Zeichnung ist wie in der eingangs genannten Anmeldung ausschnittsweise eine bekannte elektronische Datenvermittlungsanlage EDS dargestellt (siehe »Nachrichtentechnische Zeitschrift«, Vol. 22, 1969, Seiten 444 bis 463 und Siemens-Druckschrift »Siemens System EDS«, System Description, published and distributed by Siemens Corp., Iselin, N. J.). Von dieser Datenvermittlungsanlage EDS sind im vorliegenden Fall lediglich zu einer ersten Gruppe von Anschlußschaltungen gehörende Anschlußschaltungen SAGA1 bis SAGAn, zu einer zweiten Gruppe von Anschlußschaltungen gehörende Anschlußschaltungen SAGD1 bis SAGDn, den einzelnen Gruppen von Anschlußschaltungen zugehörige Eingabe-/Ausgabe-Codewandler EACWa bzw. EACWd, eine Übertragungsablaufsteuerung UEAS, eine Speichereinheit SE und eine Programmsteuereinheit PE dargestellt. Die Anschlußschaltungen SAGA1 bis SAGAn dienen dazu, digitale Signale polaritätswechselweise zu verarbeiten. Die zu der anderen Gruppe von Anschlußschaltungen gehörenden Anschlußschaltungen SAGD1 bis SAGDn dienen zur Verarbeitung von sogenannten Bitgruppen, das sind jeweils eine Mehrzahl von Bits umfassende digitale Signale, die auch als Envelopes bezeichnet werden. Ein Envelope umfaßt normalerweise z. B. acht Bits.

Von den in der Zeichnung angedeuteten Anschlußschaltungen sind die Polaritätswechsel verarbeitenden Anschlußschaltungen mit Sende-/Empfangseinrichtungen verbunden, welche digitale Signale mit einer ersten Datenübertragungsrate und in einem ersten Datenformat abgeben und aufnehmen. Bei diesen Sende-/Empfangseinrichtungen mag es sich um übliche Fernschreib- bzw. Telex-Stationen handeln, von denen eine in der Zeichnung mit Tx angedeutet ist. Diese Telex-Stationen mögen mit einer Datenübertragungsrate von 50 Bd und unter Ausnutzung des internationalen Telegraphenalphabets Nr. 2 arbeiten, also mit einem Start-Stop-Datenformat. Die digitale Signale in Form von Bitgruppen bzw. Envelopes verarbeitenden Anschlußschaltungen der in der Zeichnung dargestellten zweiten Gruppe von Anschlußschaltungen SAGD1 bis SAGDn sind mit Sende-/Empfangseinrichtungen verbunden, die digitale Signale seriell in Form von Bitgruppen abgeben bzw. aufnehmen können. Bei diesen Sende-/Empfangseinrichtungen mag es sich im vorliegenden Fall um Bürofernschreibstationen handeln, die auch als Teletex-Stationen bezeichnet werden, von denen eine in der Zeichnung mit Ttx angedeutet ist. Diese Bürofernschreibstationen vermögen digitale Signale mit einer Datenübertragungsrate von 2400 Bit/sec abzugeben und aufzunehmen, und zwar als synchrone Datensignale. Dies bedeutet, daß zu jeweils einer Bitgruppe gehörende Bits nicht durch Start- und Stop-Zeichen festgelegt sind. Ein Datensignal (Wort) umfaßt normalerweise z. B. acht Bits.

Mit der in der Zeichnung dargestellten Datenvermittlungsanlage ist erfindungsgemäß eine Umsetzeinrichtung TTU verbunden. Diese Umsetzeinrichtung TTU, die gegebenenfalls in einer Mehrzahl vorgesehen sein kann, weist gewissermaßen zwei unterschiedliche Anschlußseiten auf. Mit ihrer einen Anschlußseite ist die Umsetzeinrichtung TTU an einer der zu der ersten Gruppe von Anschlußschaltungen gehörenden Anschlußschaltungen SAGA1 bis SAGAn angeschlossen. Mit ihrer anderen Anschlußseite ist die Umsetzeinrichtung TTU an einer der zu der zweiten Gruppe von Anschlußschaltungen gehörenden Anschlußschaltungen SAGD1 bis SAGDn angeschlossen. Dabei ist die Umsetzeinrichtung TTU auf ihrer genannten einen Anschlußseite mittels einer Schnittstellenschaltung USARTa eingangs- und ausgangsseitig mit der Anschlußschaltung SAGAn der ersten Gruppe von Anschlußschaltungen verbunden. Auf ihrer anderen Anschlußseite ist die Umsetzeinrichtung TTU an der Anschlußschaltung SAGD1 der zweiten Gruppe von Anschlußschaltungen mit einer weiteren Schnittstellenschaltung angeschlossen, die eine Signalisierungs-Umsetzschaltung USARTd und eine Datenübertragungsschaltung HDLC enthält. Diese beiden Schaltungen sind mit ihren einen Eingängen gemeinsam am Ausgang der Anschlußschaltung SAGD1 angeschlossen. Die Anschlußschaltung SAGD1 ist mit ihrem Eingang am Ausgang a einer Weichenschaltung MUX angeschlossen, die mit Signaleingängen e2, e1 an Ausgängen der zu der gerade betrachteten Schnittstellenschaltung gehörenden Schaltungen USARTd und HDLC angeschlossen ist. Mit einem Steuereingang ci ist die Weichenschaltung MUX an einem Steuerausgang der Datenübertragungsschaltung HDLC angeschlossen. Je nachdem, welches Steuersignal dem Steuereingang ci der Weichenschaltung MUX zugeführt wird, verbindet diese ihren Ausgang a entweder mit ihrem Signaleingang e2 oder mit ihrem Signaleingang e1. Dabei kann so vorgegangen sein, daß die Weichenschaltung MUX bei Fehlen eines entsprechenden Steuersignals ihren Ausgang a mit ihrem Signaleingang e2 verbindet bzw. diese Verbindung durchschaltet. An dieser Stelle sei noch angemerkt, daß die mit den beiden Signaleingängen e1, e2 verbundenen Ausgänge der Datenübertragungsschaltung HDLC bzw. der Signalisierungs-Umsetzschaltung USARTd an diesen Ausgängen nicht Signale abgeben, die ihnen an den zuvor betrachteten Eingängen zugeführt worden sind. Vielmehr geben die betreffenden Schaltungen an den gerade erwähnten Ausgängen Signale dann ab, wenn ihnen an noch zu betrachtenden weiteren Eingängen bzw. Anschlüssen entsprechende Signale zugeführt werden. Bezüglich der Steuerung der Weichenschaltung MUX sei noch darauf hingewiesen, daß ein dazu erforderliches Steuersignal auf entsprechende Ansteuerung der Datenübertragungsschaltung HDLC von der noch näher zu betrachtenden Steuerschaltung der Umsetzeinrichtung TTU abgegeben werden mag.

Die vorstehend betrachteten beiden Schnittstellenschaltungen — zum einen die Schnittstellenschaltung USARTa und zum anderen die Schnittstellenschaltung mit der Datenübertragungsschaltung HDLC und der Signalisierungs-Umsetzschaltung USARTd — sind mit einer Anzahl von Anschlüssen mit der bereits erwähnten Steuerschaltung der Umsetzeinrichtung TTU verbunden. Diese Steuerschaltung enthält im vorliegenden Fall einen Mikroprozessor MP mit zugehörigem Programmspeicher ROM. In der Zeichnung ist in diesem Zusammenhang angedeutet, daß eine Anzahl von Busleitungen vorgesehen ist, an denen der Mikroprozessor MP und der Programmspeicher ROM angeschlossen sind, bei dem es sich vorzugsweise um einen Lesespeicher handeln mag. Eine Busleitung AB stellt eine Adreßbusleitung dar; eine weitere Busleitung DB stellt eine Datenbusleitung dar, und die letzte noch dargestellte Busleitung CB stellt eine Steuerbusleitung dar. An diesen drei Busleitungen AB, DB und CB sind die erwähnten Schnittstellenschaltungen mit entsprechenden Anschlüssen angeschlossen. Außerdem ist an den drei Busleitungen noch ein Speicher RAM mit entsprechenden Anschlüssen angeschlossen. Bei diesem Speicher RAM handelt es sich um einen Speicher mit wahlfreiem Zugriff. Wie weiter unten noch näher ersichtlich werden wird, dient dieser Speicher RAM dazu, Signale zwischenzuspeichern, die von einer Telex-Station zu einer Teletex-Station oder von einer Teletex-Station zu einer Telex-Station zu übertragen sind. Diese Signale umfassen sowohl Signalisierungsinformationen als auch Nachrichteninformationen.

Neben den vorstehend erläuterten Schaltungsverbindungen ist noch auf eine weitere Schaltungsverbindung hinzuweisen. Die Datenübertragungsschaltung HDLC der Umsetzeinrichtung TTU ist nämlich mit einem gesonderten Ausgang an einem sogenannten Unterbrechungseingang Int des Mikroprozessors MP angeschlossen. Über diese Schaltverbindung kann der Mikroprozessor MP in seinem Betrieb von der Datenübertragungsschaltung HDLC her veranlaßt werden, die Abwicklung von Vorgängen zu steuern, die die Datenübertragung betreffen, wie dies weiter unten noch näher ersichtlich werden wird. Überdies können dem Mikroprozessor MP an demselben Unterbrechungseingang oder an entsprechenden weiteren Unterbrechungseingängen gesonderte Unterbrechungssignale zugeführt werden, die beispielsweise aus Netztaktsignalen abgeleitet sind, mit denen in dem Datennetz EDS gearbeitet wird. Im Rhythmus des Auftretens derartiger Unterbrechungssignale wird der Mikroprozessor MP dann die Verarbeitung von Signalen steuern, die der Umsetzeinrichtung TTU von Telex-Stationen oder von Teletex-Stationen zugeführt werden.

Nachdem zuvor der Aufbau der in der Zeichnung dargestellten Schaltungsanordnung erläutert worden ist, sei nunmehr die Arbeitsweise dieser Schaltungsanordnung näher betrachtet. Dabei wird zunächst prinzipiell auf diejenigen Vorgänge eingegangen, die für die Übertragung von digitalen Signalen zwischen einer Telex-Station Tx und einer Bürofernschreib- bzw. Teletex-Station Ttx maßgebend sind. Auf die generellen Funktionen der Datenvermittlungsanlage EDS braucht in diesem Zusammenhang nicht weiter eingegangen zu werden, da diese Funktionen als bekannt vorauszusetzen sind.

Zur Erläuterung der Arbeitsweise der in der Zeichnung dargestellten Schaltungsanordnung sei angenommen, daß die Telex-Station Tx eine Fernschreibnachricht mit 50 Bd aussendet. Die diese Fernschreibnachricht bildenden digitalen Signale — das sind sowohl Signalisierungsinformationen als auch Nachrichteninformationen — gelangen seriell über die Anschlußschaltung SAGA1 in die Datenvermittlungsanlage EDS hinein, welche aufgrund ihrer Vermittlungsfunktion diese digitalen Signale über die Anschlußschaltung SAGAn an die Schnittstellenschaltung USARTa der Umsetzeinrichtung TTU abgibt. Die Schnittstellenschaltung USARTa mag im vorliegenden Fall die ihr seriell zugeführten digitalen Signale in eine Parallelform umsetzen und über die Datenbusleitung DB an den Speicher RAM abgeben. Dabei werden jeweils nur so viele digitale Signale in diesem Speicher RAM eingespeichert, daß diese entsprechend der Datenübertragungsprozedur der Teletex-Stationen an eine derartige Teletex-Station wieder abgegeben werden können. Im einfachsten Fall kann es sich hierbei um ein einziges Fernschreibzeichen handeln.

Für die gerade erwähnte Weiterleitung der in dem Speicher RAM von einer Telex-Station nacheinander eingespeicherten Signale ist in der Umsetzeinrichtung TTU die die Datenübertragungsschaltung HDLC und die Signalisierungs-Umsetzschaltung USARTd umfassende Schnittstellenschaltung maßgebend. In der Signalisierungs-Umsetzschaltung USARTd erfolgt eine Parallel-Serien-Umsetzung der zu einer Signalisierungsinformation gehörenden Bits, und außerdem erfolgt eine solche Formatumsetzung, daß mittels der umgesetzten Signalisierungsinformation die gewünschte Teletex-Station auch angesteuert werden kann. In der Datenübertragungsschaltung HDLC erfolgt eine Parallel-Serien-Umsetzung der in dem Speicher RAM gespeicherten Nachrichtensignale sowie eine Formatumwandlung der betreffenden Signale, so daß diese von der gewünschten Teletex-Station aufgenommen werden können. Wie oben bereits erwähnt, werden die so gebildeten digitalen Signale über die entsprechend eingestellte Weichenschaltung MUX an die Anschlußschaltung SAGD1 der Datenvermittlungsanlage EDS abgegeben. Über die Anschlußschaltung SAGDn werden die betreffenden digitalen Signale von der Datenvermittlungsanlage EDS dann schließlich an die gewünschte Teletex-Station, wie an die in der Zeichnung dargestellte Teletex-Station Ttx abgegeben.

Werden von einer Teletex-Station, wie von der in der Zeichnung angedeuteten Teletex-Station Ttx digitale Signale abgegeben, um zu einer Telex-Station, wie der in der Zeichnung dargestellten Telex-Station Tx hin übertragen zu werden, so laufen folgende Vorgänge ab. Die betreffenden digitalen Signale gelangen zunächst über die Anschlußschaltung SAGDn in die Datenvermittlungsanlage EDS hinein, welche diese digitalen Signale über die Anschlußschaltung SAGD1 an die Umsetzeinrichtung TTU abgibt. Dabei nimmt die Datenübertragungsschaltung HDLC nunmehr eine Serien-Parallel-Umwandlung dieser seriell auftretenden digitalen Signale vor, und zwar der eigentlichen Nachrichtensignale. Diese Signale werden dann über die Datenbusleitung DB an den Speicher RAM abgegeben. Die Signalisierungs-Umsetzschaltung USARTd nimmt eine entsprechende Serien-Parallel-Umwandlung der Signalisierungsinformationen vor, und außerdem bewirkt diese Schaltung eine Formatumwandlung dieser Signalisierungsinformationen, so daß diese für eine Ansteuerung einer gewünschten Telex-Station direkt verwendet werden können. Die Übertragung der von der Teletex-Station Ttx abzugebenden digitalen Signale erfolgt hier jedoch blockweise. Dies bedeutet, daß zu der Umsetzeinrichtung TTU jeweils nur eine Anzahl von digitale Signale umfassende Signalgruppen bzw. Signalblöcke von einer Teletex-Station abgegeben werden. Eine derartige Signalgruppe kann beispielsweise eine solche Größe besitzen, daß eine Signalisierungsinformation vollständig erfaßt ist. Nach Aufnahme einer derartigen Signalgruppe in der Umsetzeinrichtung TTU — diese Aufnahme ist mit der für Teletex-Stationen maßgebenden Datenübertragungsprozedur und mit dem dabei maßgebenden Datenformat vorgenommen worden — werden die zu der betreffenden Signalgruppe gehörenden Signale aus dem Speicher RAM ausgespeichert und von der Umsetzeinrichtung TTU an die Datenvermittlungsanlage EDS abgegeben. Umfassen die Signale einer derartigen Signalgruppe eine Signalisierungsinformation, so erfolgt in der Datenvermittlungsanlage EDS die Herstellung einer Verbindung zu einer gewünschten Telex-Station, wie der Telex-Station Tx. Handelt es sich hingegen bei den betreffenden Signalen um Nachrichtensignale, so werden diese über die bereits bestehende Verbindung zu der betreffenden Telex-Station Tx hin geleitet, und zwar mit der Datenübertragungsprozedur und mit dem Datenformat, entsprechend der bzw. dem die Telex-Station arbeitet. In der Schnittstellenschaltung USARTa der Umsetzeinrichtung TTU erfolgt dabei eine Parallel-Serien-Umsetzung der aus dem Speicher RAM ausgespeicherten und an diese Schnittstellenschaltung abgegebenen digitalen Signale.

Im Anschluß an jede Signalübertragung von der Teletex-Station zu der Umsetzeinrichtung TTU wird ein Signalgruppen-Endezeichen übertragen. Dieses Signalgruppen-Endezeichen wird durch den Mikroprozessor MP der Umsetzeinrichtung TTU dazu herangezogen, die Signalaufnahmefähigkeit der Umsetzeinrichtung TTU zu überprüfen, d. h. festzustellen, ob der Speicher RAM der Umsetzeinrichtung TTU eine für die Aufnahme von Signalen ausreichende Kapazität besitzt. Im einfachsten Fall wird in diesem Zusammenhang geprüft, ob der Speicher RAM leer ist. Stellt der Mikroprozessor MP fest, daß der Speicher RAM eine genügende Signalaufnahmefähigkeit besitzt, um zumindest eine weitere Signalgruppe von einer Teletex-Station aufzunehmen, so bewirkt er die Abgabe eines Quittungszeichens an die betreffende Teletex-Station. Die betreffende Teletex-Station veranlaßt dann erst nach Aufnahme dieses Quittungszeichens die Abgabe von eine weitere Signalgruppe bildenden Signalen an die Umsetzeinrichtung TTU. Im Anschluß an diese Signalgruppe tritt dann wieder ein Signalgruppen-Endezeichen auf, welches in der Umsetzeinrichtung TTU in der gleichen Weise bewertet wird, wie dies zuvor erläutert worden ist. Um die Übertragung der betreffenden Signale bzw. Zeichen einfach vornehmen zu können, ist die betreffende Teletex-Station mit der Umsetzeinrichtung TTU solange durchgeschaltet verbunden, bis sämtliche Signale von der betreffenden Teletex-Station abgegeben worden sind.

Die in dem Speicher RAM der Umsetzeinrichtung TTU jeweils eingespeicherten, Signalgruppen bildenden Signale werden aus diesem Speicher RAM dann ausgelesen, um zu der gewünschten Telex-Station Tx hin übertragen zu werden. Dabei bewirkt die Schnittstellenschaltung USARTa die Abgabe dieser Signale mit der Datenübertragungsprozedur und in dem Datenformat, entsprechend der bzw. dem die Telex-Station ausgelegt ist.

Um je nach Art der übertragenen digitalen Signale — entweder Signalisierungsinformation oder Nachrichteninformation — die Signalisierungs-Umsetzschaltung USARTd oder die Datenübertragungsschaltung HDLC wirksam schalten zu können, sind von dem Mikroprozessor MP der Steuerschaltung entsprechende Steuersignale über die Steuerbusleitung CB abzugeben. Derartige Steuersignale kann der Mikroprozessor MP jeweils zu bestimmten Zeitpunkten während der jeweiligen Übertragung von digitalen Signalen zu bzw. von dem Speicher RAM abgeben. Dies bedeutet, daß der Mikroprozessor entsprechende Steuersignale an die Umsetzschaltung USARTd während der sogenannten Signalisierungsphase und entsprechende andere Steuersignale an die Datenübertragungsschaltung HDLC während der Textübertragungsphase abgibt. Die für die Ansteuerung der erwähnten Umsetzschaltung USARTd bestimmten Steuersignale treten dabei während jeder Signalisierungsphase auf, d. h. während der Zeitspanne der Abgabe einer Signalisierungsinformation vom bzw. zum Speicher RAM. Die Schnittstellenschaltungen können dabei so ausgebildet sein, daß sie das Auftreten von Signalisierungsinformationen erkennen und daraufhin entsprechende Unterbrechungssignale an den Mikroprozessor MP abgeben.

Abschließend sei bezüglich der Umsetzeinrichtung TTU noch bemerkt, daß der in dieser Umsetzeinrichtung enthaltene Mikroprozessor MP zusammen mit dem erwähnten Programmspeicher ROM die eigentliche Steuereinrichtung der Umsetzeinrichtung TTU darstellt. Aus dem betreffenden Programmspeicher ROM erhält der Mikroprozessor MP auf entsprechende Anforderung hin Befehlsinformationen für die Ausführung der jeweils vorzunehmenden Steuerungsvorgänge. Wie oben erläutert, laufen derartige Vorgänge unter dem Einfluß von Unterbrechungssignalen ab, die wenigstens einem Unterbrechungseingang des Mikroprozessors MP zugeführt werden. Für die Schaltungen der Umsetzeinrichtung TTU können kommerziell erhältliche Bausteine verwendet werden. Für die Schnittstellenschaltungen USARTa und für die Signalisierungs-Umsetzschaltung USARTd können Bausteine mit der Bezeichnung 8251A von Intel verwendet werden. Die Datenübertragungsschaltung HDLC kann durch einen Baustein mit der Bezeichnung 8273 von Intel gebildet sein. Die Weichenschaltung MUX kann eine herkömmliche Multiplexerschaltung sein, wie sie beispielsweise unter der Bezeichnung SN 74151 bekannt ist. Der Programmspeicher ROM kann durch Bausteine mit der Bezeichnung 2732 von Intel gebildet sein, und der eigentliche Signalspeicher RAM kann durch Bausteine mit der Bezeichnung 2185 von Intel gebildet sein. Als Mikroprozessor MP kann ein solcher des Typs 8085 von Intel verwendet werden.

Im vorstehenden ist erläutert worden, daß digitale Signale zwischen mit unterschiedlichen Datenübertragungsprozeduren und mit unterschiedlichen Datenformaten arbeitenden Sende- und Empfangseinrichtungen übertragen werden. Dabei ist bezüglich der Datenübertragungsprozeduren davon ausgegangen, daß diese sich sowohl hinsichtlich der Datenübertragungsraten als auch hinsichtlich der Arten der Signalübertragung voneinander unterscheiden. Es sei jedoch angemerkt, daß es auch möglich ist, daß sich die betreffenden Datenübertragungsprozeduren lediglich hinsichtlich der Datenübertragungsraten voneinander unterscheiden.

## Patentansprüche

1. Schaltungsanordnung zur Übertragung von digitalen Signalen zwischen mit einer ersten Datenübertragungsprozedur und einem ersten Datenformat arbeitenden Sende- und Empfangseinrichtungen und mit einer von der ersten Datenübertragungsprozedur verschiedenen zweiten Datenübertragungsprozedur sowie mit einem von dem ersten Datenformat verschiedenen zweiten Datenformat arbeitenden Sende- und Empfangseinrichtungen über eine Vermittlungsanlage, wobei die Signalübertragung entsprechend der ersten Datenübertragungsprozedur mit einer Datenübertragungsrate erfolgt, die höher ist als die Datenübertragungsrate, mit der eine Signalübertragung entsprechend der zweiten Datenübertragungsprozedur erfolgt, wobei die für einen Betrieb mit der ersten Datenübertragungsprozedur und dem ersten Datenformat ausgelegten Sende- und Empfangseinrichtungen und die für einen Betrieb mit der zweiten Datenübertragungsprozedur und dem zweiten Datenformat ausgelegten Sende- und Empfangseinrichtungen an für die jeweilige Datenübertragungsprozedur und das jeweilige Datenformat vorgesehenen gesonderten Anschlußschaltungen einer ersten Gruppe bzw. einer zweiten Gruppe von Anschlußschaltungen der Vermittlungsanlage angeschlossen sind, wobei an wenigstens einer Anschlußschaltung jeder Gruppe von Anschlußschaltungen eine Umsetzeinrichtung angeschlossen ist, in die lediglich im Zuge einer Signalübertragung von einer mit der ersten Datenübertragungsprozedur und dem ersten Datenformat arbeitenden Sendeeinrichtung zu einer mit der zweiten Datenübertragungsprozedur und dem zweiten Datenformat arbeitenden Empfangseinrichtung die insgesamt abzugebenden Nachrichtensignale in Form von jeweils eine Anzahl von Signalen umfassenden Signalgruppen entsprechend der ersten Datenübertragungsprozedur und mit dem ersten Datenformat einschreibbar sind und aus der danach die zu der jeweiligen Signalgruppe gehörenden Signale ausspeicherbar und entsprechend der zweiten Datenübertragungsprozedur und mit dem zweiten Datenformat an die für eine Signalaufnahme in Frage kommende Empfangseinrichtung abgebbar sind, und wobei im Zuge einer Signalübertragung von einer entsprechend der zweiten Datenübertragungsprozedur und mit dem zweiten Datenformat arbeitenden Sendeeinrichtung zu einer entsprechend der ersten Datenübertragungsprozedur und mit dem ersten Datenformat arbeitenden Empfangseinrichtung die jeweils abzugebenden Nachrichtensignale entsprechend der zweiten Datenübertragungsprozedur und mit dem zweiten Datenformat in die Umsetzeinrichtung einspeicherbar und nach Vorliegen einer ausreichenden Anzahl von Signalen entsprechend der ersten Datenübertragungsprozedur und mit dem ersten Datenformat ausspeicherbar und an die für eine Signalaufnahme in Frage kommende Empfangseinrichtung abgebbar sind, dadurch gekennzeichnet, daß im Anschluß an jede Signalübertragung von der für einen Betrieb mit der ersten Datenübertragungsprozedur und dem ersten Datenformat ausgelegten Sende- und Empfangseinrichtung (Ttx) an die Umsetzeinrichtung (TTU) ein Signalgruppen-Endezeichen abgegeben wird, welches zur Überprüfung der Signalaufnahmefähigkeit in der betreffenden Umsetzeinrichtung (TTU) dient und welches bei Vorliegen einer ausreichenden Signalaufnahmefähigkeit in der betreffenden Umsetzeinrichtung (TTU) die Abgabe eines Quittungszeichens an die in Frage kommende Sendeeinrichtung (Ttx) veranlaßt, die erst nach Aufnahme dieses Quittungszeichens eine weitere Signalgruppe bildende Signale abgibt.

2. Schaltungsanordnung nach Anspruch 1, dadurch gekennzeichnet, daß die Umsetzeinrichtung (TTU) eine Speicheranordnung (RAM) mit wahlfreiem Zugriff enthält, die mit ihrem Datenein- und Datenausgang über Schnittstellenschaltungen (USARTa; USARTd,. HDLC) an jeweils einer Anschlußschaltung (SAGAn; SAGD1) jeder Gruppe von Anschlußschaltungen angeschlossen ist, und daß die Schnittstellenschaltungen (USARTa; USARTd, HDLC) und die Speicheranordnung (RAM) mit einer Steuerschaltung (MP, ROM) verbunden sind, welche auf das Auftreten einer Bedienungsanforderung von einer der Schnittstellenschaltungen her, welche an einer der Anschlußschaltungen einer der beiden Gruppen von Anschlußschaltungen angeschlossen ist, zunächst eine Verbindung zwischen dieser Schnittstellenschaltung (z. B. USARTa) und der Speicheranordnung (RAM) und sodann eine Verbindung zwischen dieser Speicheranordnung (RAM) und einer Schnittstellenschaltung (USARTd, HDLC) herstellt, die an einer zu der anderen Gruppe von Anschlußschaltungen gehörenden Anschlußschaltung (SAGD1) angeschlossen ist.

3. Schaltungsanordnung nach Anspruch 2, dadurch gekennzeichnet,. daß wenigstens eine Schnittstellenschaltung (USARTd, HDLC) mit einem Unterbrechungs-Steuereingang (Int) der Steuerschaltung (MP, ROM) verbunden ist, welche durch Aufnahme eines Unterbrechungssignals an diesem Eingang (Int) die Herstellung einer Verbindung zwischen der Speicheranordnung (RAM) und der Anschlußschaltung wirksam steuert, mit der die betreffende Schnittstellenschaltung verbunden ist.

4. Schaltungsanordnung nach Anspruch 2 oder 3, dadurch gekennzeichnet, daß die an einer Anschlußschaltung der ersten Gruppe von Anschlußschaltungen (SAGA1 bis SAGAn) angeschlossene Schnittstellenschaltung (USARTa) zur Parallel-Serien-Umsetzung bzw. zur Serien-Parallel-Umsetzung der ihr eingangsseitig jeweils zugeführten Signale entsprechend ausgelegt ist und daß die an einer Anschlußschaltung der zweiten Gruppe von Anschlußschaltungen (SAGD1 bis SAGDn) angeschlossene Schnittstellenschaltung eine für die Aufnahme und Umsetzung von ihr eingangsseitig jeweils zugeführten Signalisierungsinformationen dienende Signalisierungs-Umsetzschaltung (USARTd) mit Serien-Parallel-/Parallel-Serien-Umsetzfunktionen und eine Datenübertragungsschaltung (HDLC) enthält, die lediglich bei der Datenübertragung zwischen der Speicheranordnung (RAM) und der Sende-/Empfangseinrichtung (Ttx) wirksam ist, die an einer der zu der zweiten Gruppe von Anschlußschaltungen gehörenden Anschlußschaltungen (SAGD1 bis SAGDn) angeschlossen ist.

5. Schaltungsanordnung nach einem der Ansprüche 2 bis 4, dadurch gekennzeichnet, daß die Steuerschaltung einen Mikroprozessor (MP) enthält, der mit einer Datenbusleitung (DB), einer Adreßbusleitung (AB) und einer Steuerbusleitung (CB) sowohl an den Schnittstellenschaltungen (USARTa; USARTd, HDLC) und an der Speicheranordnung (RAM) als auch an einem Programmspeicher (ROM) angeschlossen ist.

6. Schaltungsanordnung nach Anspruch 4 oder 5, dadurch gekennzeichnet, daß die an einer Anschlußschaltung der zweiten Gruppe von Anschlußschaltungen (SAGD1 bis SAGDn) angeschlossene Schnittstellenschaltung (USARTd, HDLC) mit ihrer Signalisierungs-Umsetzschaltung (USARTd) und mit ihrer Datenübertragungsschaltung (HDLC) eingangsseitig gemeinsam und ausgangsseitig über eine Weichenschaltung (MUX) an der betreffenden Anschlußschaltung (SAGD1) der zweiten Gruppe von Anschlußschaltungen angeschlossen ist und daß die Weichenschaltung (MUX) für die Übertragung von Nachrichtensignalen und Signalisierungsinformationen in unterschiedlichen Stellungen eingestellt ist.

## Claims

1. Circuit arrangement for transmitting digital signals between transmitting and receiving devices which operate with a first data transmission procedure and a first data format, and transmitting and receiving devices which operate in accordance with a second data transmission procedure which differs from the first and in accordance with a second data format which differs from the first, via an exchange system, where the signal transmission is carried out in accordance with the first data transmission procedure at a data transmission rate which is higher than the data transmission rate at which signal transmission takes place in accordance with the second data transmission procedure, where the transmitting and receiving devices designed for operation with the first data transmission procedure and the first data format, and the transmitting and receiving devices designed for operation with the second data transmission procedure and the second data format are connected to special connection circuits — provided for the particular data format and the relevant data transmission procedure — of a first and second group respectively of connection circuits of the exchange system, where at least one connection circuit within each group of connection circuits is connected to a conversion device into which, in the course of a signal transmission from a transmitting device operating with the first data transmission procedure and the first data format to a receiving device operating with the second data transmission procedure and the second data format, all the communications signals to be output may be entered in the form of signal groups, each comprising a number of signals, in accordance with the first data transmission procedure and the first data format, and from which subsequently the signals forming part of the signal group in question may be output and emitted, in accordance with the second data transmission procedure and the second data format, to the receiving device responsible for signal reception, and where, in the course of a signal transmission from a transmitting device operating in accordance with the second data transmission procedure and the second data format to a receiving device operating in accordance with the first data transmission procedure and the first data format, the communications signals which are to be output can be input in accordance with the second data transmission procedure and the second data format into the conversion device and following the occurrence of a sufficient number of signals can be output in accordance with the first data transmission procedure and the first data format and emitted to the receiving device responsible for signal reception, characterised in that following every signal transmission from the transmitting and receiving device (Ttx) designed for operation in accordance with the first data transmission procedure and the first data format to the conversion device (TTU) a signal-group end signal is emitted which serves to check the signal reception capacity in the relevant conversion device (TTU) and which, in the event that a sufficient signal reception capacity prevails in the relevant conversion device (TTU) causes an acknowledgement signal to be emitted to the transmitting device (Ttx) in question which does not emit signals forming a further signal group until this acknowledgement signal has been received.

2. Circuit arrangement as claimed in claim 1, characterised in that the conversion device (TTU) contains a random access storage arrangement (RAM) which is connected by its data input and data output via interface circuits (USARTa; USARTd, HDLC) to a connection circuit circuit (SAGAn; SAGD1) of each group of connection circuits, and that the interface circuits (USARTa; USARTd, HDLC) and the storage arrangement (RAM) are connected to a control circuit (MP, ROM) which, in response to the occurrence of a service request from one of the interface circuits which is connected to one of the connection circuits within one of the two groups of connection circuits, firstly establishes a connection between this interface circuit (e.g. USARTa) and the storage arrangement (RAM) and then establishes a connection between this storage arrangement (RAM) and an interface circuit (USARTd, HDLC) which is connected to a connection circuit (SAGD1) belonging to the other group of connection circuits.

3. Circuit arrangement as claimed in claim 2, characterised in that at least one interface circuit (USARTd, HDLC) is connected to an interrupt control input (Int) of the control circuit (MP, ROM) which, as a result of the reception of an interrupt signal at this input (Int), actuates the establishment of a connection between the storage arrangement (RAM) and the connection circuit to which the interface circuit.

4. Circuit arrangement as claimed in claim 2 or 3, characterised in that the interface circuit (USARTa) connected to a connection circuit of the first group of connection circuits (SAGA1 to SAGAn) is designed for the parallel-series conversion and series-parallel conversion of the signals with which it is supplied at its input, and that the interface circuit connected to a connection circuit within the second group of connection circuits (SAGD1 to SAGDn) contains a signalling conversion circuit (USARTd) which serves to receive and convert the items of signalling information with which it is supplied at its input and which possesses series-parallel/parallel-series conversion functions and further contains a data transmission circuit (HDLC) which is operative only in the event of data transmission between the storage arrangement (RAM) and the transmitting/receiving device (Ttx) which is connected to one of the connection circuits (SAGD1 to SAGDn) which belong to the second group of connection circuits.

5. Circuit arrangement as claimed in one of the claims 2 to 4, characterised in that the control circuit contains a microprocessor (MP) which is connected by a data bus line (DB), an address bus line (AB) and a control bus line (CB) both to the interface circuits (USARTa; USARTd, HDLC) and the storage arrangement (RAM) and also to a programme store (ROM).

6. Circuit arrangement as claimed in claim 4 or 5, characterised in that the interface circuit (USARTd, HDLC) which is connected to a connection circuit of the second group of connection circuits (SAGD1 to SAGDn) is at its input end connected in common to its signalling conversion circuit (USARTd) and by its data transmission circuit (HDLC) and via a switching circuit (MUX) at its output end to the relevant connection circuit (SAGD1) of the second group of connection circuits, and that the switching circuit (MUX) is in different states set up for the transmission of communications signals and items of signalling information.

## Revendications

1. Circuit pour transmettre des signaux numériques entre les dispositifs d'émission et de réception travaillant avec une première procédure de transmission de données et avec un premier format de données et des dispositifs d'émission et de réception travaillant avec une seconde procédure de transmission de données, qui diffère de la première procédure de données, et un second format de données différant du premier format de données, par l'intermédiaire d'une installation de transmission, dans lequel la transmission de signaux s'effectue conformément à la première procédure de transmission de données avec une vitesse de transmission de données, qui est supérieure à la vitesse de transmission des données, avec laquelle une transmission de signaux s'effectue selon la seconde procédure de transmission de données, et dans lequel les dispositifs d'émission et de réception, conçus pour un fonctionnement avec la première procédure de transmission de données et le premier format de données, et les dispositifs d'émission et de réception conçus pour un fonctionnement avec la seconde procédure de transmission de données et le second format de données sont raccordés à des circuits particuliers de branchement, prévus pour la procédure respective de transmission de données et pour le format respectif de données, d'un premier groupe ou d'un second groupe de circuits de branchement de l'installation de transmission, et dans lequel à au moins un circuit de branchement de chaque groupe de circuits de branchement est raccordé un dispositif de conversion, dans lequel seulement, au cours d'une transmission de signaux depuis un dispositif d'émission travaillant avec la première procédure de transmission de données et avec le premier format de données vers un dispositif de réception travaillant avec la seconde procédure de transmission de données et le second format de données, les signaux d'information qui doivent au total être délivrés peuvent être inscrits sous la forme de groupes de signaux englobant respectivement un certain nombre de signaux, selon la première procédure de transmission de données et avec le premier format de données, et hors duquel les signaux faisant partie du groupe respectif de signaux peuvent être extraits ensuite et être délivrés selon la seconde procédure de transmission de données et avec le second format de données au dispositif de réception entrant en jeu pour la réception des signaux, et dans lequel, au cours d'une transmission de signaux depuis un dispositif d'émission travaillant selon la seconde procédure de transmission de données et avec le second format de données vers un dispositif de réception travaillant selon la première procédure de transmission de données et avec le premier format de données, les signaux d'information qui doivent être respectivement délivrés peuvent être mémorisés selon la seconde procédure de transmission de données et avec le second format de données dans le dispositif de conversion et peuvent être extraits, une fois présent un nombre suffisant de signaux, selon la première procédure de transmission de données et avec le premier format de données et être délivrés au dispositif de réception entrant en jeu pour la réception des signaux, caractérisé en ce qu'à la suite de chaque transmission de signaux, depuis un dispositif d'émission et de réception (Ttx), conçu pour fonctionner avec la première procédure de transmission de données et le premier format de données, est envoyé au dispositif de conversion (TTU) un caractère final de groupes de signaux qui sert à contrôler la capacité de réception des signaux dans le dispositif de conversion (TTU) considéré et qui, dans le cas de l'existence d'une capacité suffisante de réception de signaux dans le dispositif de conversion (TTU) considéré, déclenche la délivrance d'un caractère d'accusé de réception au dispositif d'émission (Ttx) entrant en jeu et qui délivre des signaux constituant un autre groupe de signaux uniquement après réception de ce caractère d'accusé de réception.

2. Circuit selon la revendication 1, caractérisé en ce que le dispositif de conversion (TTU) contient un dispositif de mémoire (RAM) à accès direct, qui est raccordé par son entrée et par sa sortie des données, par l'intermédiaire de circuits d'interface (USARTa; USARTd, HDLC), à un circuit respectif de branchement (SAGAn; SAGAD1) de chaque groupe de circuits de branchement, et que les circuits d'interface (USARTa; USARTd, HDLC) et le dispositif de mémoire (RAM) sont reliés à un circuit de commande (MP, ROM) qui, lors de l'apparition d'une demande de service de la part de l'un des circuits d'interface, qui est raccordé à l'un des circuits de branchement de l'un des deux groupes de circuits de branchement, établit tout d'abord une liaison entre ce circuit d'interface (par exemple USARTa) et le dispositif de mémoire (RAM) et ensuite une liaison entre ce dispositif de mémoire (RAM) et un circuit d'interface (USARTd, HDLC), qui est raccordé à un circuit de branchement (SAGD1) faisant partie de l'autre groupe de circuits de branchement.

3. Circuit selon la revendication 2, caractérisé en ce qu'au moins un circuit d'interface (USARTd, HDLC) est relié à une entrée de commande d'interruption (Int) du circuit de commande (MP, ROM), qui, par suite de la réception d'un signal d'interruption à cette entrée (Int), commande de façon active l'établissement d'une liaison entre le dispositif de mémoire (RAM) et le circuit de branchement auquel est relié le circuit d'interface considéré.

4. Circuit selon la revendication 2 ou 3, caractérisé en ce que le circuit d'interface (USARTa) raccordé à un circuit de branchement du premier groupe de circuits de branchement (SAGA1 à SAGAn) est agencé de façon correspondante pour réaliser la conversion parallèle-série et la conversion série-parallèle des signaux qui sont respectivement envoyés à son entrée, et que le circuit d'interface raccordé à un circuit de branchement du second groupe de circuits de branchement (SAGD1 à SAGDn) contient un circuit de conversion de signalisation (USARTd) servant à la réception et à la conversion d'informations de signalisation qui sont envoyées à son entrée, et possédant des fonctions de conversion série-parallèle/parallèle-série, et un circuit de transmission de données (HDLC) qui n'est actif que lors de la transmission de données entre le dispositif de mémoire (RAM) et le dispositif d'émission/de réception (Ttx), qui est raccordé à l'un des circuits de raccordement (SAGD1 à SAGDn) faisant partie du second groupe de circuits de branchement.

5. Circuit selon l'une des revendications 2 à 4, caractérisé en ce que le circuit de commande contient un microprocesseur (MP), qui est raccordé à un bus de données (DB), à un bus d'adresses (AB) et à un bus de commande (CB) ainsi qu'aux circuits d'interface (USARTa; USARTd, HDLC) et au dispositif de mémoire (RAM) ainsi qu'à une mémoire de programmes (ROM).

6. Circuit selon la revendication 4 ou 5, caractérisé en ce que le circuit d'interface (USARTd, HDLC), raccordé à un circuit de branchement du second groupe de circuits de branchement (SAGD1 à SAGDn) est raccordé en commun du côté entrée, par son circuit de conversion de signalisation (USARTd) et par son circuit de transmission de données (HDLC), et du côté sortie par l'intermédiaire d'un circuit d'aiguillage (MUX), au circuit considéré de branchement (SAGD1) du second groupe de circuits de branchements et que le circuit d'aiguillage (MUX) est réglé pour la transmission de signaux d'informations et d'informations de signalisation dans des positions différentes.